# FASCICULE DE BREVET EUROPEEN

(11) **EP 3 647 626 B1**
(45) Date de publication et mention de la délivrance du brevet: **14.10.2020**
(21) Numéro de dépôt: 19203739.8
(22) Date de dépôt: 17.10.2019
(51) Int. Cl.: F16H 1/08, F16H 55/17, F16H 57/04, F02C 7/36

(54) **ROUE DENTEE**
ZAHNRAD
TOOTHED WHEEL

(30) Priorité: 30.10.2018 FR 1860026
(43) Date de publication de la demande: 06.05.2020
(73) Titulaire: Safran Transmission Systems, 92700 Colombes (FR)
(72) Inventeur: PENNACINO, Antoine, Jacques, Marie, 77550 MOISSY-CRAMAYEL (FR); CHARRIER, Mathieu, Jean, 77550 MOISSY-CRAMAYEL (FR); MORELLI, Boris, Pierre, Marcel, 75014 PARIS (FR)
(74) Mandataire: Ernest Gutmann - Yves Plasseraud S.A.S.

(56) Documents cités:
- CN-A- 106 151 426
- FR-A1- 3 047 279
- JP-A- H11 348 039
- US-A1- 2017 227 093

## Description

### DOMAINE

La présente invention concerne une roue dentée, destinée notamment à former un satellite d'un réducteur de vitesse à train d'engrenage, en particulier pour une turbomachine.

### CONTEXTE

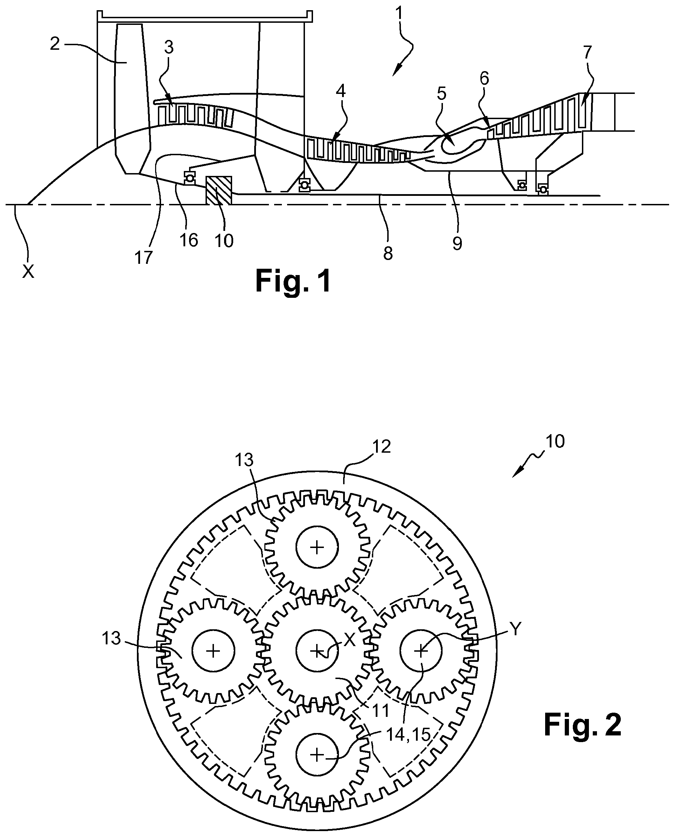

Comme cela est représenté à la figure 1 une turbomachine d'avion 1 comporte classiquement, d'amont vers l'aval dans le sens du flux de gaz au sein de la turbomachine, une soufflante 2, un compresseur basse-pression 3, un compresseur haute-pression 4, une chambre de combustion 5, une turbine haute pression 6 et une turbine basse pression 7. Le compresseur basse pression 3 est entraîné en rotation par la turbine basse pression 7, au travers d'un arbre basse pression 8. Le compresseur haute pression 4 est entraîné en rotation par la turbine haute pression 6, au travers d'un arbre haute pression 9, coaxial à l'arbre basse pression. L'axe de la turbomachine 1 et les axes desdits arbres 8, 9 sont confondus et notés X. La soufflante 2 est entraînée en rotation par l'arbre basse pression 8, par l'intermédiaire d'un réducteur de vitesse à train d'engrenage 10.

Comme illustré à la figure 2, un tel réducteur de vitesse 10 comporte généralement un planétaire radialement interne 11 apte à pivoter autour d'un axe qui est confondu avec l'axe X, un planétaire annulaire radialement externe 12 coaxial avec le planétaire interne 11, et des satellites 13 engrenant avec le planétaire interne 11 et avec le planétaire externe 12. Chaque satellite 12 est monté pivotant autour d'un axe 14 appartenant à un porte-satellite 15 et dont l'axe géométrique est noté Y.

Le planétaire interne 11 peut également être appelé solaire. Le planétaire externe 12 peut également être appelé couronne.

Le porte-satellite 15 peut être fixe, la couronne 12 étant apte à pivoter. Un tel réducteur de vitesse 10 est alors de type planétaire.

En variante, la couronne 12 peut être fixe, le porte-satellite 15 étant apte à pivoter. Un tel réducteur de vitesse 1 est alors de type épicycloïdal.

L'arbre basse pression 8 est généralement couplé en rotation au planétaire interne 11 et l'arbre 16 de la soufflante 2 est couplé en rotation à l'élément mobile de sortie du train d'engrenage, c'est-à-dire soit à la couronne 12 dans le cas d'un réducteur de vitesse 10 de type planétaire, soit au porte-satellite 15 dans le cas d'un réducteur de vitesse 10 de type épicycloïdal.

Le train d'engrenage 10 est logé dans un carter 17 et est lubrifié par des moyens d'alimentation en huile, comme cela est notamment connu du document FR 3 047 279, au nom de la Demanderesse. Dans la suite de la description, on s'intéressera en particulier à la lubrification des satellites 13 et/ou du planétaire interne 11.

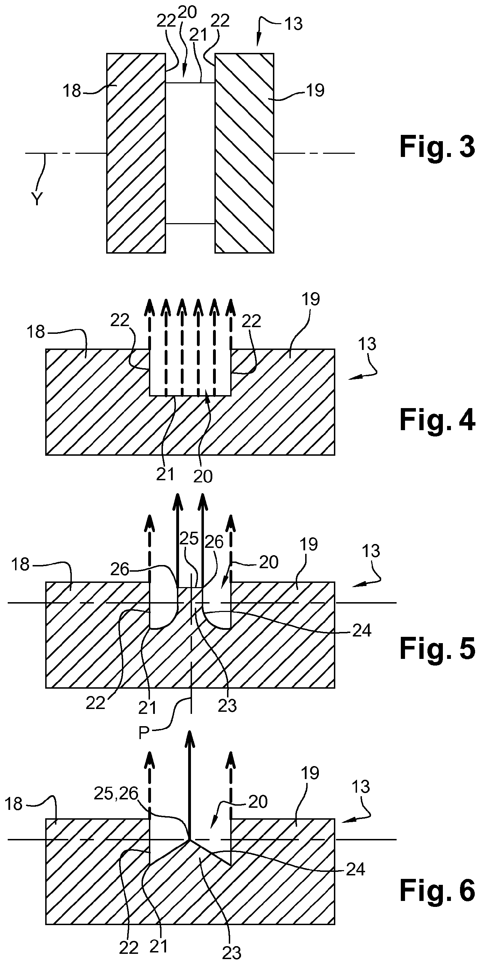

Il est connu d'utiliser des satellites 13 et des planétaire internes 11 présentant une denture à chevrons, comme cela est illustré aux figures 3 et 4.

Chaque satellite 13 se présente alors sous la forme d'une roue dentée ou d'un pignon denté, comportant un corps comprenant un trou central d'axe géométrique Y, destiné au montage du satellite sur un axe du porte-satellite.

Dans la suite de la description, les termes axial, radial et circonférentiel sont définis par rapport à l'axe Y.

Le corps comporte une première zone dentée 18 et une seconde zone dentée 19, écartées axialement l'une de l'autre et délimitant entre elle une gorge annulaire 20 à section rectangulaire ou carrée

La gorge 20 est ainsi délimitée par une paroi de fond cylindrique 21 et par deux parois latérales radiales 22 formées par les extrémités axiales correspondantes des zones dentées 18, 19. La paroi de fond 21 est située radialement à l'intérieur par rapport au fond des dentures des zones 18, 19.

Les zones dentées 18, 19 forment une denture en chevrons. En d'autres termes, les deux zones dentées 18, 19 comportent respectivement deux dentures hélicoïdales, de dimensions identiques, mais d'hélices en sens contraire de manière à annuler l'effort axial sur l'ensemble.

En fonctionnement, de l'huile de lubrification à basse température est amenée sur les dentures de chaque satellite 13 où elle s'échauffe. L'huile chaude issue des dentures pénètre ensuite dans la gorge 20, du fait de la forme et de l'orientation des dentures. L'huile est évacuée de la gorge 20 par centrifugation, comme cela est illustré schématiquement par des flèches à la figure 4.

En pratique, il est difficile de contrôler la position et la dimension axiale de la zone d'évacuation de l'huile. En effet, les parois latérales 22 de la gorge 20 forment des zones de discontinuité de surface propices au décollement d'une partie de l'huile. Par ailleurs, il a été constaté que de l'huile se décolle également de la surface de fond 21 de la gorge 20, sur toute la dimension axiale de la gorge 20.

Il est important de maîtriser la position axiale de l'huile chaude évacuée par centrifugation, radialement vers l'extérieur, de façon à éviter qu'elle ne vienne lubrifier d'autres zones dentées environnantes. En effet, l'huile étant déjà chaude, sa capacité de lubrification et d'absorption des calories est faible, réduisant l'efficacité d'une telle lubrification.

Par ailleurs, l'huile éjectée des satellites peut venir mouiller des surfaces ne devant pas nécessairement être lubrifiées, ce qui augmente le volume d'huile à prévoir pour assurer la lubrification. Or ce volume d'huile est défini par la capacité d'un réservoir dont les dimensions sont limitées par l'encombrement disponible au sein de la turbomachine.

De plus, des collecteurs (représentés en traits pointillés à la figure 2 peuvent être prévus circonférentiellement entre les satellites, ces collecteurs étant chargés de recueillir une partie de l'huile de lubrification issue des satellites. La maîtrise de la position axiale de la zone d'éjection de l'huile de lubrification permettrait d'optimiser et de réduire les dimensions et la masse de ces collecteurs.

L'invention vise à répondre à ces besoins, de manière simple, fiable et peu onéreuse.

### RESUME DE L'INVENTION

A cet effet, l'invention concerne un réducteur de vitesse à train d'engrenage, comportant un planétaire radialement interne apte à pivoter autour d'une axe, un planétaire annulaire radialement externe coaxial avec le planétaire interne, au moins un satellite engrenant avec le planétaire interne et avec le planétaire externe, le satellite étant monté pivotant autour d'un axe appartenant à un porte-satellite, le satellite étant formé par une roue dentée s'étendant selon un axe et comportant au moins deux zones annulaires dentées et une gorge annulaire située axialement entre lesdites zones dentées, destinée à recueillir de l'huile de lubrification issue desdites zones dentées, caractérisée en ce que ladite gorge est délimitée par une surface de fond s'étendant axialement et des surfaces latérales s'étendant radialement, caractérisée en ce que la gorge comporte au moins une partie en saillie s'étendant radialement vers l'extérieur depuis la surface de fond de la gorge.

Ladite partie en saillie est ainsi apte à générer une discontinuité géométrique provoquant un décollement du film d'huile contenu dans la gorge de façon à ce que cette huile soit expulsée radialement vers l'extérieur sous l'effet des efforts centrifuges générés en fonctionnement. La position axiale de la partie en saillie étant connue, il est possible de maîtriser la position axiale de l'huile éjectée et éviter ainsi que cette huile n'atteigne, ou atteigne en quantité trop importante, des éléments non souhaités de l'environnement auquel appartient la roue dentée.

De ce fait, on évite d'alimenter en huile chaude des éléments à refroidir. Par ailleurs, on évite également d'alimenter en huile des éléments de l'environnement qui ne doivent pas nécessairement être lubrifiés. Ainsi, on limite le volume d'huile à utiliser, ce qui permet notamment de pouvoir réduire la taille du réservoir d'huile nécessaire à l'alimentation en huile de lubrification.

Dans le cas où un collecteur est utilisé afin de récupérer tout ou partie de l'huile éjectée de ladite roue dentée, la maîtrise axiale de la position d'éjection de l'huile permet de dimensionner au mieux le collecteur, de façon à limiter notamment sa masse et son encombrement.

Ladite partie en saillie peut comporter au moins un sommet radialement externe formant une rupture de pente de la surface de ladite partie en saillie.

La formation d'une rupture de pente, c'est-à-dire d'une modification brutale ou discontinue de la pente de la surface formée par la partie en saillie, permet de faciliter le décollement du film d'huile. On garantit ainsi que la majeure partie du film d'huile présent dans la gorge se décolle dans le plan radial de la rupture de pente. La rupture de pente est de type convexe en ce qu'elle forme une zone en saillie, et non une zone en creux.

Ladite partie en saillie peut présenter une forme symétrique par rapport à un plan radial situé, par exemple, dans une zone axialement médiane de la gorge.

Le sommet peut être situé dans ledit plan radial ou centré sur ledit plan radial. Dans le cas où il existe deux sommets par exemple, lesdits sommets peuvent être situés de part et d'autre d'un plan radial axialement médian, de façon symétrique par rapport audit plan médian.

Bien entendu, ledit plan radial peut être situé ailleurs qu'au centre de la gorge.

Ladite partie en saillie peut comporter, axialement d'une zone annulaire dentée à l'autre, au moins une zone inclinée s'étendant progressivement radialement vers l'extérieur, une zone formant un sommet radialement externe, et au moins une zone inclinée s'étendant progressivement radialement vers l'intérieur.

Une zone inclinée est définie comme une zone dont la surface tournée radialement vers l'extérieur est inclinée à la fois par rapport à la direction radiale et par rapport à la direction axiale.

Chaque zone inclinée peut être plane, concave ou convexe.

La partie en saillie peut être annulaire.

La partie en saillie s'étend ainsi de façon continue sur toute la circonférence de la gorge.

En variante, la partie en saillie peut être discontinue et s'étendre par secteurs angulaires sur la circonférence de la gorge. Dans ce cas, les secteurs angulaires peuvent être régulièrement répartis sur la circonférence, de façon à éviter l'apparition d'un balourd en fonctionnement.

Les deux zones dentées peuvent former une denture en chevrons.

Comme rappelé précédemment, une denture en chevrons comporte deux dentures hélicoïdales, généralement de dimensions identiques, mais d'hélices en sens contraires, de manière à annuler l'effort axial exercé sur la roue dentée. La gorge centrale permet alors de dégager facilement les outils de taillage à l'intersection des deux hélices, la gorge étant également utilisée pour l'évacuation du lubrifiant.

En d'autres termes, dans un tel cas, les dents de la première zone dentée sont inclinées dans un premier sens par rapport à l'axe de la roue dentée, les dents de la deuxième zone dentée étant inclinées par rapport à l'axe dans un deuxième sens, opposé au premier sens. Les dents des deux zones délimitent ainsi des formes générales en V.

Bien entendu, d'autres types de dentures peuvent être utilisés, la denture étant apte à former un engrenage droit, c'est-à-dire dont les axes des éléments engrenant l'un avec l'autre sont parallèles. Les dents peuvent par exemple être orientées parallèlement à l'axe de la roue dentée. Plus généralement, l'invention est applicable à tous les engrenages à axes parallèles présentant au moins deux zones dentées séparées par une ou plusieurs gorges.

La partie en saillie peut venir de matière avec la surface de fond de la gorge.

La partie en saillie peut être formée par au moins une pièce distincte du reste de la roue dentée.

La pièce distincte, peut être annulaire ou sectorisée. La pièce annulaire ou les secteurs peuvent être fixés par des brides ou par tous moyens appropriés au reste de la roue dentée.

La dimension axiale de la partie en saillie peut s'étendre sur tout ou partie de la dimension axiale de la gorge.

La surface de fond de la gorge peut être cylindrique.

Le sommet de la partie en saillie peut être situé radialement à l'intérieur de la périphérie radialement externe des zones dentées. En d'autres termes, le sommet de la partie en saillie peut être situé radialement à l'intérieur de la gorge.

La distance radiale entre le fond de la gorge et le sommet peut être comprise entre 50 % et 100% de la dimension radiale ou hauteur de la gorge.

Il est également possible d'envisager une variante où le sommet de la partie en saillie est situé radialement à l'extérieur de la gorge, c'est-à-dire radialement à l'extérieur de la périphérie radialement externe des zones dentées.

Le sommet de la partie en saillie peut être localisé dans un unique plan radial ou s'étendre axialement sur une partie de la dimension axiale de la gorge.

Les zones dentées peuvent être formées de matière avec un corps de la roue dentée ou peuvent être formées par des pièces distinctes, rapportées sur le corps.

Le planétaire interne peut également être appelé solaire. Le planétaire externe peut également être appelé couronne.

Le porte-satellite peut être fixe, la couronne étant apte à pivoter. Un tel réducteur de vitesse est alors de type planétaire.

En variante, la couronne peut être fixe, le porte-satellite étant apte à pivoter. Un tel réducteur de vitesse est alors de type épicycloïdal.

Une turbomachine, telle par exemple qu'un turboréacteur ou un turbopropulseur d'avion, peut comporter un réducteur de vitesse à train d'engrenage du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une demi-vue schématique en coupe d'un turboréacteur à double flux de l'art antérieur ;
- la figure 2 est une vue schématique, de face, d'une partie d'un réducteur à train d'engrenage ;
- la figure 3 est une vue de côté d'une roue dentée de l'art antérieur, formant ici un satellite ;
- la figure 4 est une vue en coupe, d'une partie de la roue dentée de la figure 3 ;
- les figures 5 à 12 sont des vues correspondant à la figure 4, illustrant différentes formes de réalisation d'une roue dentée selon l'invention.

### DESCRIPTION DETAILLEE

La figure 5 représente une roue dentée ou satellite 13 selon une première forme de réalisation de l'invention.

Comme précédemment, cette roue dentée 13 comporte un corps comportant un trou central d'axe géométrique Y, destiné au montage de la roue dentée ou satellite 13 sur un axe 14 du porte-satellites 15. Le corps comporte une première zone dentée 18 et une seconde zone dentée 19, écartées axialement l'une de l'autre et délimitant entre elle une gorge 20 annulaire à section rectangulaire.

La gorge 20 est délimitée par un fond 21 et par deux parois latérales 22 radiales formées par les extrémités axiales correspondantes des zones dentées 18, 19.

Les zones dentées 18, 19 forment une denture en chevrons. En d'autres termes, les deux zones dentées 18, 19 comportent respectivement deux dentures hélicoïdales, de dimensions identiques, mais d'hélices en sens contraire de manière à annuler l'effort axial sur l'ensemble.

Cette roue dentée 13 diffère de celle décrite en référence aux figures 3 et 4 en ce que la gorge 20 comporte une partie en saillie 23 s'étendant radialement vers l'extérieur depuis le fond de la gorge.

La partie en saillie 23 est symétrique par rapport à un plan axial médian P passant par le milieu de la gorge 20. La partie en saillie 23 s'étend sur toute la dimension axiale ou largeur de la gorge 20, de sorte que la paroi de fond 21 n'est pas visible en tant que telle.

La partie en saillie 23 comporte deux parois latérales courbes concaves 24, situées de part et d'autre du plan médian P et un sommet 25 formant une portion cylindrique dont la dimension axiale peut être ajustée en fonction des besoins.

Les extrémités radialement internes des parois concaves 24 rejoignent le fond 21 de la gorge 20 ainsi que les parois latérales 22 de la gorge 20. Les extrémités radialement externes des parois concaves 24 rejoignent le sommet 25 en formant des ruptures de pente 26, c'est-à-dire des discontinuités ou des cassures de la pente.

Les extrémités radialement internes des parois concaves 24 sont situées radialement à l'intérieur par rapport au fond des dentures des zones dentées 18, 19, de façon à ce que l'huile puisse s'écouler dans la gorge 20.

Le sommet 25 est situé radialement à l'intérieur de la périphérie externe des dentures. En d'autres termes, le sommet 25 est situé radialement à l'intérieur de la gorge 20.

En fonctionnement, l'huile de lubrification ayant servi à lubrifier les dentures 18, 19 pénètre dans la gorge 20, de part et d'autre du plan P, puis s'écoule sous la forme d'un film le long des surfaces concaves 24 avant de se décoller desdites surfaces concaves 24 et d'être éjectée par centrifugation au niveau des ruptures de pente 26 du sommet 25. On notera qu'une faible partie de l'huile peut également être éjectée au niveau des surfaces latérales 22 de la gorge 20, ces surfaces 22 formant également des ruptures de pente propices au décollement du film d'huile.

Le contrôle de la dimension axiale du sommet 25 permet de réduire axialement, au besoin, la zone d'éjection de l'huile au niveau des ruptures de pente 26 du sommet 25.

La figure 6 illustre une deuxième forme de réalisation, qui diffère de celle exposée en référence à la figure 5 en ce que la partie en saillie 23 comporte deux surfaces inclinées 24 planes, dont les extrémités radialement externes se rejoignent au niveau du sommet 25. Chaque surface plane 24 peut être inclinée d'un angle compris entre 5 et 75°, par exemple, par rapport à l'axe Y.

Dans cette forme de réalisation, la dimension axiale du sommet 25 est nulle, de sorte que le sommet 25 est réduit à une ligne annulaire formant la rupture de pente 26. Dans cette forme de réalisation également, la partie en saillie 23 s'étend sur toute la largeur de la gorge 20. Chaque surface plane 24 s'étend ainsi sur la moitié de la largeur de la gorge 20.

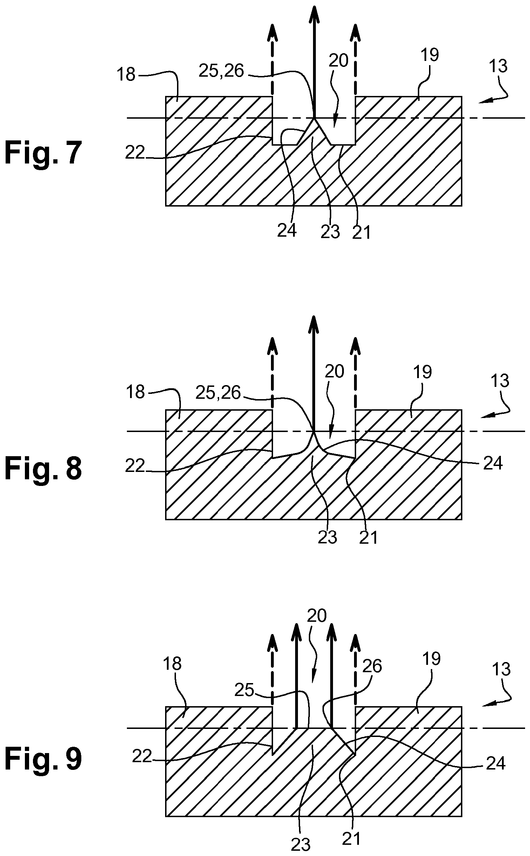

La figure 7 illustre une troisième forme de réalisation, qui diffère de celle exposée en référence à la figure 6 en ce que la partie en saillie 23 s'étend sur une partie seulement de la largeur de la gorge 20.

La figure 8 illustre une quatrième forme de réalisation, qui diffère de celle exposée en référence à la figure 6 en ce que les parois inclinées 24 sont des parois concaves dont la forme est différente d'une forme en arc de cercle et dont le profil est étudié pour assurer au mieux le dégagement des outils d'usinage des dentures et/ou le guidage et l'éjection de l'huile au niveau du sommet 25. Les parois inclinées 24 peuvent également être formées chacune de deux parties planes de pentes différentes, reliées ou non par une zone arrondie de liaison.

La figure 9 illustre une cinquième forme de réalisation, qui diffère de celle exposée en référence à la figure 6 en ce que la dimension axiale du sommet 25 n'est pas nulle, celui-ci définissant une surface cylindrique comme dans le cas de la figure 5. Une telle partie en saillie 23 comporte ainsi deux ruptures de pentes 26, situées aux extrémités axiales du sommet 25.

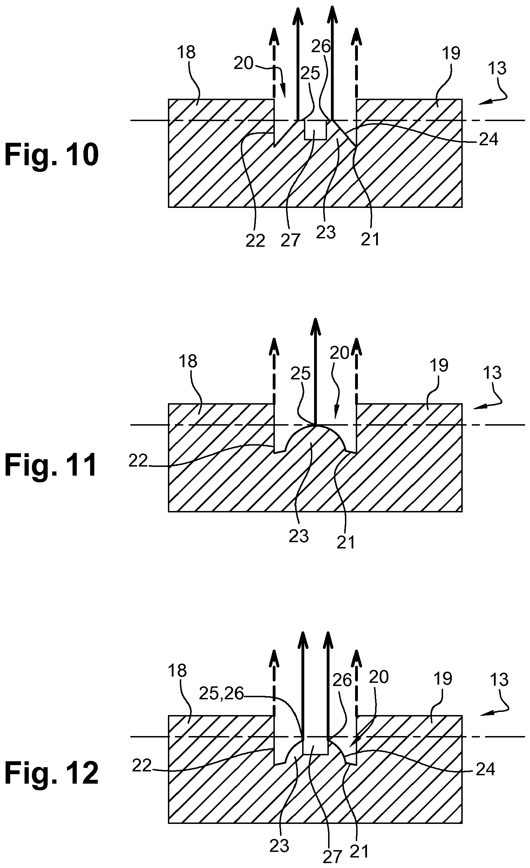

La figure 10 illustre une sixième forme de réalisation, qui diffère de celle exposée en référence à la figure 9 en ce qu'une gorge auxiliaire 27 est formée dans le sommet 25. La gorge auxiliaire 27 est ici délimitée par une surface de fond cylindrique et deux surfaces latérales radiales. La largeur de la gorge auxiliaire 27 est inférieure à la largeur du sommet cylindrique 25. La surface de fond de la gorge auxiliaire 27 est située radialement à l'extérieur par rapport aux extrémités radialement internes 21 des parois latérales planes 24.

La figure 11 illustre une septième forme de réalisation, qui diffère de celles exposées précédemment en ce que la partie en saillie 23 présente une section arrondie, par exemple de forme hémicirculaire. D'autres formes sont également possibles. La partie en saillie 23 s'étend ici sur une partie seulement de la largeur de la gorge 20. En variante, elle peut s'étendre sur toute la largeur de la gorge 20. On notera qu'une telle partie en saillie 23 ne comporte pas de rupture de pente 26.

La figure 12 illustre une huitième forme de réalisation, qui diffère de celle exposée à la figure 11 en ce qu'une gorge auxiliaire 27 est formée dans le sommet 25. La gorge auxiliaire 27 est ici délimitée par une surface de fond cylindrique et deux surfaces latérales radiales. La surface de fond de la gorge auxiliaire est située radialement à l'extérieur par rapport aux extrémités radialement internes 21 des parois latérales arrondies 24.

Le choix de la forme et des dimensions de la partie en saillie 23 est notamment dépendant du procédé de fabrication et doit permette le dégagement des outils d'usinage lors de la réalisation des zones dentées 18, 19.

Dans chacune des formes de réalisation précitées, la distance radiale entre le fond 21 de la gorge 20 et le sommet 25 peut être comprise entre 50 % et 100% de la dimension radiale ou hauteur de la gorge 20.

La partie en saillie 23 peut être formée par au moins une pièce distincte du reste de la roue dentée 13.

La pièce distincte, peut être annulaire ou sectorisée. La pièce annulaire ou les secteurs peuvent être fixés par des brides ou par tous moyens appropriés au reste de la roue dentée 13.

Chacune des formes de réalisation précitée permet d'améliorer la maîtrise de la position axiale de l'huile éjectée et éviter ainsi que cette huile n'atteigne, ou atteigne en quantité trop importante, des éléments non souhaités du réducteur de vitesse.

## Revendications

1. Réducteur de vitesse à train d'engrenage, comportant un planétaire radialement interne (11) apte à pivoter autour d'un axe (X), un planétaire annulaire radialement externe (12) coaxial avec le planétaire interne (11), au moins un satellite (13) engrenant avec le planétaire interne (11) et avec le planétaire externe (12), le satellite (13) étant monté pivotant autour d'un axe (14) appartenant à un porte-satellite (15), le satellite (13) étant formé par une roue dentée (13) s'étendant selon un axe (Y) et comportant au moins deux zones annulaires dentées (18, 19) et une gorge (20) annulaire située axialement entre lesdites zones dentées (18, 19), destinée à recueillir de l'huile de lubrification issue desdites zones dentées (18, 19), ladite gorge (20) étant délimitée par une surface de fond (21) s'étendant axialement et des surfaces latérales (22) s'étendant radialement, **caractérisée en ce que** la gorge (20) comporte au moins une partie en saillie (23) s'étendant radialement vers l'extérieur depuis la surface de fond (21) de la gorge (20).

2. Réducteur selon la revendication 1, **caractérisé en ce que** ladite partie en saillie (23) comporte au moins un sommet (25) radialement externe formant une rupture de pente de la surface de ladite partie en saillie (23).

3. Réducteur selon la revendication 1, **caractérisé en ce que** ladite partie en saillie (23) présente une forme symétrique par rapport à un plan radial (P) situé par exemple dans une zone axialement médiane de la gorge (20).

4. Réducteur selon l'une des revendications 1 à 3, **caractérisé en ce que** ladite partie en saillie (23) comporte, axialement d'une zone annulaire dentée (18, 19) à l'autre, au moins une zone inclinée (24) s'étendant progressivement radialement vers l'extérieur, une zone formant un sommet (25) radialement externe, et au moins une zone inclinée (24) s'étendant progressivement radialement vers l'intérieur.

5. Réducteur selon la revendication 4, **caractérisé en ce que** chaque zone inclinée (24) est plane, concave ou convexe.

6. Réducteur selon l'une des revendications 1 à 5, **caractérisé en ce que** la partie en saillie (23) est annulaire.

7. Réducteur selon l'une des revendications 1 à 6, **caractérisé en ce que** les deux zones dentées (18, 19) forment une denture en chevrons.

8. Réducteur selon l'une des revendications 1 à 7, **caractérisé en ce que** la partie en saillie (23) vient de matière avec la surface de fond (21) de la gorge (20).

9. Réducteur selon l'une des revendications 1 à 7, **caractérisé en ce que** la partie en saillie (23) est formée par au moins une pièce distincte du reste de la roue dentée.

## Patentansprüche

1. Untersetzungsgetriebe mit Getriebestrang, das ein um eine Achse (X) schwenkbares radial internes Antriebswellenrad (11) umfasst, ein radial externes ringförmiges Antriebswellenrad (12) koaxial zum internen Antriebswellenrad (11), mindestens ein in das interne Antriebswellenrad (11) und das externe Antriebswellenrad (12) eingreifendes Planetenrad (13), wobei das Planetenrad (13) drehbar um die Achse (14) eines Planetenradträgers (15) montiert ist, wobei das Planetenrad (13) gebildet wird durch ein Zahnrad (13), welches sich entlang einer Achse (Y) erstreckt und mindestens zwei ringförmige gezahnte Bereiche (18,19) und eine ringförmige Nut (20) axial zwischen den gezahnten Bereichen (18,19) umfasst, wobei diese dazu bestimmt ist, das aus den gezahnten Bereichen (18, 19) stammende Schmieröl aufzunehmen, wobei besagte Nut (20) durch eine sich axial erstreckende Bodenfläche (21) und sich radial erstreckende Seitenflächen (22) abgrenzt wird, **dadurch gekennzeichnet, dass** die Nut (20) mindestens einen vorspringenden Teil (23) umfasst, der sich von der Bodenfläche (21) der Nut (20) radial nach außen erstreckt.

2. Getriebe nach Anspruch 1, **dadurch gekennzeichnet, dass** der vorspringende Teil (23) mindestens einen radial externen Scheitel (25) umfasst, der einen Gefällknick der Fläche des besagten vorspringenden Teils (23) bildet.

3. Getriebe nach Anspruch 1, **dadurch gekennzeichnet, dass** der vorspringende Teil (23) in Bezug auf eine radiale Ebene (P), die sich beispielsweise in einem axial mittleren Bereich der Nut (20) befindet, eine symmetrische Form aufweist.

4. Getriebe nach einem der Ansprüche 1 bis 3, **dadurch gekennzeichnet, dass** der vorspringende Teil (23) axial von einer ringförmigen gezahnten Bereich (18, 19) zum nächsten mindestens einen geneigten Bereich (24) umfasst, der sich allmählich radial nach außen erstreckt, wobei ein Bereich einen radial externen Scheitel (25) bildet, und mindestens einen geneigten Bereich (24), der sich allmählich radial nach innen erstreckt.

5. Getriebe nach Anspruch 4, **dadurch gekennzeichnet, dass** jeder geneigte Bereich (24) eben, konkav oder konvex ist.

6. Getriebe nach einem der Ansprüche 1 bis 5, **dadurch gekennzeichnet, dass** der vorspringende Teil (23) ringförmig ist.

7. Getriebe nach einem der Ansprüche 1 bis 6, **dadurch gekennzeichnet, dass** die beiden gezahnten Bereiche (18, 19) eine Pfeilverzahnung bilden.

8. Getriebe nach einem der Ansprüche 1 bis 7, **dadurch gekennzeichnet, dass** der vorspringende Teil (23) mit der Bodenfläche (21) der Nut (20) werkstoffmäßig einstückig hergestellt ist.

9. Getriebe nach einem der Ansprüche 1 bis 7, **dadurch gekennzeichnet, dass** der vorspringende Teil (23) durch mindestens ein Teil gebildet wird, das sich vom Rest des Zahnrads unterscheidet.

## Claims

1. A gear train speed reducer, comprising a radially internal planet gear (11) capable of pivoting about an axis (X), a radially external annular planet gear (12) coaxial with the internal planet gear (11), at least one satellite gear (13) meshing with the internal planet gear (11) and with the external planet gear (12), the satellite gear (13) being mounted to pivot about an axis (14) belonging to a satellite carrier (15), the satellite gear (13) being formed by a toothed wheel (13) extending along an axis (Y) and comprising at least two annular toothed areas (18, 19) and an annular groove (20) axially located between said toothed areas (18, 19), for collecting lubricating oil from said toothed areas (18, 19), said groove (20) being delimited by an axially extending bottom surface (21) and radially extending lateral surfaces (22), **characterized in that** the groove (20) has at least one projecting portion (23) extending radially outwards from the bottom surface (21) of the groove (20).

2. The reducer according to claim 1, **characterized in that** said projecting portion (23) has at least one radially external apex (25) forming a break of slope of the surface of said projecting portion (23).

3. The reducer according to claim 1, **characterized in that** said projecting portion (23) has a symmetrical shape with respect to a radial plane (P) located, for example, in an axially median area of the groove (20).

4. The reducer according to one of claims 1 to 3, **characterized in that** said projecting portion (23) comprises, axially from one annular toothed area (18, 19) to the other, at least one inclined area (24) progressively extending radially outwards, an area forming a radially external apex (25), and at least one inclined area (24) progressively extending radially inwards.

5. The reducer according to claim 4, **characterized in that** each inclined area (24) is flat, concave or convex.

6. The reducer according to one of claims 1 to 5, **characterized in that** the projecting portion (23) is annular.

7. The reducer according to one of claims 1 to 6, **characterized in that** the two toothed areas (18, 19) form a chevron gearing.

8. The reducer according to one of claims 1 to 7, **characterized in that** the projecting portion (23) is produced in one piece with the bottom surface (21) of the groove (20).

9. The reducer according to one of claims 1 to 7, **characterized in that** the projecting portion (23) is formed by at least one part distinct from the rest of the toothed wheel.
